# EUROPEAN PATENT APPLICATION

(11) **EP 1 994 854 A2**
(43) Date of publication of application: **26.11.2008**
(21) Application number: 08008558.2
(22) Date of filing: 07.05.2008
(51) Int. Cl.: A46B 9/02, B08B 1/02, B62J 31/00, F16H 7/18

(54) **Cleaning device for a motion transmission chain**

(30) Priority: 25.05.2007 IT MI20071064
(71) Applicant: Passoni, Giorgio, 20146 Milano (IT)
(72) Inventor: Passoni, Giorgio, 20146 Milano (IT)
(74) Representative: Castiglia, Paolo

(57) **Abstract**

Cleaning device (1) for a motion transmission chain (2), comprising a main body (10) adapted to be associated to a substantially straight branch of the chain (2) and to an external constraint in order to permit the relative running of the chain along a substantially straight chain running direction (x), between a chain inlet opening (12) and an chain outlet opening (13). The device (1) comprises cleaning means (20) associated to the aforementioned main body (10) and adapted to apply a mechanical cleaning action to the chain (2). The device (1) further comprises guiding means (15,16) of the chain (2) running defined on the aforementioned main body (10) and adapted to act on at least one link (50, 60) of the chain (2) in order to oppose to the thrusts exerted by the chain (2) on the main body (10) of the device (1) in reaction to the application of the aforementioned mechanical cleaning action.

## Description

The present invention relates to a cleaning device for a motion transmission chain.

In particular, the device of the present invention is, preferably but not restrictively, adapted to permit the cleaning (and/or maintenance and/or degreasing) of a motorbike drive chain.

Therefore, throughout the present description explicit reference to the cleaning of a motorbike drive chain will be made, it being understood that what said is valid also for any other kind of motion transmission chain.

As known, it is advisable to carry out a periodical chain cleaning, before lubricating it, in order to prolong its working life and to ensure an adequate drive efficiency. In some cases, chain cleaning is also carried out to preserve a good-looking aspect.

Historically, chain cleaning has always been carried out by using a cleaning spray or a paintbrush (or brush) soaked in a cleaning fluid, typically gas oil.

Such a cleaning method, besides being long and uncomfortable for the operator, requires accessibility to the chain from different sides, which is not so easy when the chain is mounted on the motorbike.

Therefore several devices which permit a faster and more comfortable cleaning chain than the above described manual cleaning operations have been proposed. In particular, devices are well known comprising a main body adapted to be associated to the chain and equipped with brushes adapted to remove the dirt from the chain. The chain cleaning occurs keeping firm the main body in its position with respect to the chain and translating the chain with respect to the main body.

However such devices, apart from requiring the main body to be kept in firm position with respect to the chain, show a drawback due to the risk of the chain to balk.

The technical problem at the basis of the present invention is to carry out a quick, easy and complete chain cleaning without the risk of clogging.

Therefore the present invention relates to a cleaning device for a motion transmission chain, comprising:
- a main body adapted to be associated to a substantially straight branch of a motion transmission chain and to an external constraint in order to permit, during the chain cleaning, the relative running of the chain with respect to the main body between a chain inlet opening and an chain outlet opening along a substantially straight chain running direction;
- cleaning means associated to the aforementioned main body and adapted to apply a mechanical cleaning action to the aforementioned chain;
characterized in that the device comprises guiding means of the chain running defined on the aforementioned main body and adapted to act on at least one chain link in order to oppose to the thrusts exerted by the chain on the aforementioned main body in reaction to the application of aforementioned mechanical cleaning action.

Advantageously, the provision of the aforementioned guide means on the main body of the chain cleaning device and the coupling of the main body to external constraint permit to prevent the chain from moving in directions other than the chain running direction, except minor movements due to clearances and/or dimensional tolerance and to the need to let the chain running with respect to main body of the cleaning device. Basically, the aforementioned guide means, opposing to the thrusts exerted by the chain on the main body in reaction to the application of the mechanical cleaning action on the chain, prevent the device from undesired rotation around its own transversal, longitudinal and vertical axis. Therefore a self-alignment of the main body with respect to the chain during the chain cleaning is obtained, in such a way avoiding the risk of the chain to clogging.

Preferably, the aforementioned external constraint is any kind of hold member fixed to the motorbike frame. In such a way it is possible to achieve the relative moving of the chain with respect to the cleaning device by simply moving the motorbike (typically pushing on by hand) or alternatively by making the wheel to rotate. Therefore, the chain cleaning is particularly easy, quick and complete; thus is also due to the possibility to operate on the chain at the side thereof facing the motorbike frame without forcing the user to get uncomfortable positions.

In addition thereof, advantageously, guiding the chain through its links allows to obtain a substantially continuous and constant chain guiding action; this is due to the considerable size of the links along the chain running direction and to the little gap between one link and the next one. On the other hand, the rounded shape of the links facilitates the inlet of the chain in the cleaning device; this fact, together with the fact that the chain is articulated around its own transversal axis, permits to avoid undesired device rotation around said transversal axis.

Preferably, the guiding means do not touch the ends of the coupling pins joining the internal links with the external links of the chain and the roller of the chain. In fact, if the chain was guided through the coupling pins, there would be a very discontinuous contact between chain coupling pins and guiding means provided in the device, this being due to the small size of the pins along the chain running direction and to the considerable distance between one pin and the next one. Such a discontinuous contact between pins and guiding means, would cause a risk of chain clogging.

Besides, the risk of chain clogging would be increased due to the fact that, typically, the aforementioned pins typically have a cold riveted head surface, that is not a smooth surface; on the contrary, chain links have a better surface finishing, which is advantageous in the relative running of the chain with respect to the main body of the present invention.

Advantageously, the risk of chain clogging is reduced also due to the fact that the guiding action is performed on structural components of the chain with higher stiffness (i.e. the chain links), not on chain elements having low guiding capability, such as rollers or pins.

Preferably, the cleaning device of the present invention is adapted to be mounted to the lower branch of the chain when the chain is installed on the motorbike. In this area indeed there is a biggest space for manoeuvring. Besides, the device of the present invention is designed in such a way not to modify the chain path when applied to the chain itself; in other words, the chain branch remains basically straight even after the cleaning device has been applied and during chain cleaning.

Preferably, the guiding means comprise at least one first running guide defined on at least one first internal surface of the main body and adapted to act on at least one internal link of the chain to prevent said least one internal link from moving along a lateral direction substantially orthogonal to the chain running direction.

Advantageously, guiding the chain at its internal links allows the device of the present invention to be used even on chain that can be opened, in which, typically, there is a couple of pins longer than the other ones at a false link provided for letting the chain be opened. Obviously, this would not be possible if the chain was guided through the aforementioned pins.

Even more preferably, said at least one first running guide comprises a couple of opposite first side shoulders adapted to contact respective opposite internal side surfaces of said at least one internal link of the chain.

In the preferred embodiment of the device of the present invention, said at least one first running guide extends on said at least one first internal surface along the aforementioned chain running direction for at least one length at least equal to the pitch of the internal link of the chain. In this way it is guaranteed that when a link moves away from the guide the next link starts to be guided, this being advantageous for the correct and efficient operation of the cleaning device.

In particular, said at least one first running guide extends in the main body along the aforementioned chain running direction preferably with a first length at the chain inlet opening and with a second length at the chain outlet opening.

This arrangement is particularly preferred since it permit the chain to be guided both at the inlet portion of the cleaning device and at the outlet portion of the device, thus ensuring the chain alignment with respect to the device during chain cleaning.

In the preferred embodiment of the device of the present invention , the main body is defined by an upper body and a lower body removably connectable to each other. The possibility of the main body of the cleaning device of the present invention to be dismounted permits, advantageously, an easy mounting/dismounting of the device on/from the chain without need to dismount the chain from the motorbike.

Preferably, the aforementioned running guide is defined in the upper body of the device.

In a preferred embodiment of the device of the present invention, the chain running of the guiding means further comprise, besides the aforementioned first running guide, at least one second running guide defined on at least one internal surface of the second main body and adapted to act on at least one external link of the chain to prevent said at least one external link from moving along the aforementioned lateral direction.

Therefore, in the preferred embodiment of the device of the present invention, there is a combined action for the chain at its internal and external links; in such a way, chain guiding is particularly efficient. Anyhow it is foreseen an embodiment of the device of the present invention where only the second running guide is provided, i.e. where the chain is guided only at its external links against possible lateral movements. Even in this case all the advantages above mentioned with reference to the first running guide are obtained.

Preferably, said at least one second running guide comprises a couple of opposite second side shoulders adapted to contact respective opposite external side surfaces of said at least one chain external link.

Even more preferably, said at least one second running guide extends on said at least one second internal surface for at least one length at least equal to the pitch of the external link of the chain.

In particular, said at least one second running guide extends in the aforementioned main body along the aforementioned chain running direction preferably for a first length at the chain inlet opening and for a second length at the chain outlet opening.

In the preferred embodiment of the device of the present invention, said at least one second running guide is defined in the lower body of the device. Advantageously, in case of combined action of the first running guide (provided on the upper body) and of the second running guide (provided on the lower body), the chain is guided both at an upper portion and a lower portion thereof, this being advantageous for the correct and efficient effectiveness of the cleaning device.

The position of the aforementioned at least one first running guide and at least one second running guide can be inverted, i.e. the aforementioned at least one first running guide can be defined in the lower body of the device and the aforementioned at least one second running guide can be defined in the upper body of the device.

Preferably the main body of the device of the present invention comprises centring means to properly centre the upper body with respect to the lower body.

In particular, in a first embodiment of the device of the present invention, the aforementioned centring means comprise at least one couple of projecting elements integrally formed with at least one of the upper body and the lower body, and at least one couple of housing seats of the aforementioned jutting elements integrally formed with the other one of the upper body and the lower body; such a solution is particularly advantageous from the costructive simpleness standpoint since these projecting elements can be obtained by moulding.

In an alternative embodiment of the device of the present invention, the aforementioned centring means comprise metallic pins adapted to be housed in respective seats obtained both in the upper body and in the lower body; such a solution is particularly advantageous in terms of strength of the coupling between upper body and lower body and of functional flexibility due to the possibility of adjusting the relative position between the upper body and the lower body, with the subsequent possibility to leave a minimum gap adapted to facilitate the chain running.

Preferably, the cleaning means of the device of the present invention comprise a plurality of brushes.

More preferably, the main body comprise four side walls and each side wall has at least one seat for at least one of said brushes. Such an arrangement permits an uniform and effective cleaning action.

In the preferred embodiment of the device of the present invention, the brushes of at least one first couple of brushes act from opposite sides on at least one internal link and on at least one external link of the chain and the brushes of at least one second couple of brushes act from opposite sides on at least one external link of the chain. Such an arrangement permits an even more uniform and effective cleaning action, whereas the brushes provided on opposite side surfaces of the device act on the external links of the chain, whilst the brushes provided on the upper and lower side surfaces of the device act simultaneously on both the external and the internal links of the chain.

Preferably, at least some of the aforementioned brushes are removably connectable to main body of the, in order to permit their periodical replacement.

Moreover, at least some of the brushes may be connected to the main body of the device in an adjustable way, so that their position with respect to the chain may be adjusted (e.g. moving them close to the chain as bristles wear out).

Furthermore, at least some of the brushes may be pivotally mounted on the main body, so as to have a little balancing and/or rotating movement of the brushes, in order to further facilitate the cleaning action.

In a particularly preferred embodiment of the device of the present invention, at least some of the aforementioned brushes have a not straight surface profile, as for instance an S-shape profile. Such a profile, being substantially conjugated to that of the external surfaces of the links of the chain , is particularly advantageous for an effective dirt removal from the chain.

Preferably, the brushes of at least one of said first couple of brushes and said second couple of brushes have different position on the main body along the chain running direction. In particular, the upper brushes are ahead of (or behind) the lower brushes along the aforementioned chain running direction. Also such an arrangement is due to the desire to increase the chain cleaning effectiveness.

In the preferred embodiment thereof, the device of the present invention comprises a pin for fastening the main body to the external constraint and a restraint cable adapted to be associated to the pin and to the external constraint, in such a way not to exert any stress on the chain. In this way, the main body of the present invention can move with respect to the chain to comply with the chain movements during the running thereof, therefore helping the device to self-align on the chain.

Preferably, the pin comprises a portion with a reduced diameter, the restraint cable being adapted to be associated with the aforementioned portion with a reduced diameter.

Preferably, the pin is arranged on the main body between the chain inlet opening and the chain outlet opening in a substantially middle position along the aforementioned chain running direction. Advantageously, the pin is in a neutral position with respect to the thrusts generated at the chain inlet opening and at the chain outlet opening. In such a way, the rotation of the device around a vertical axis is avoided, rotation which would induce the chain to clog. Therefore the self-alignment of the device on the chain is facilitated.

Furthermore, the pin is preferably associated to the lower body of the device.

Preferably, the restraint cable is associated to the external constraint in such a way to be tilted by a small size angle a with respect to the chain running direction, in order to minimize any possible rotation of the device around a longitudinal axis.

In the preferred embodiment of the device of the present invention, the main body comprises a reservoir for a chain cleaning fluid.

Preferably, this reservoir comprises at least one evacuation bore with a size precisely shaped to let cleaning fluid dropping by gravity. Said at least one bore is preferably inclined with respect to the aforementioned chain running direction by about 45°, and more preferably it opens into the main body at the aforementioned cleaning means.

Preferably, the side surfaces of the main body has some lightening areas (e.g. areas without material).

Further features and advantages of the device of the present invention will appear better from the following detailed description of a preferred embodiment thereof, made only by way of information and not restrictively with reference to the attached drawings. In these drawings:

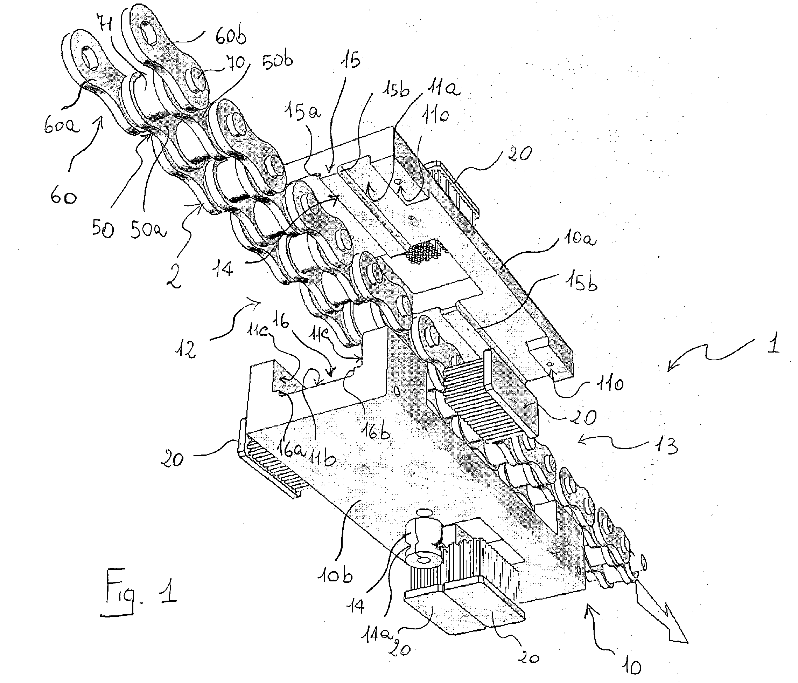

- figure 1 is an exploded perspective view, from a first point of view, of a device in accordance with the present invention;
- figure 2 is an exploded perspective view, from a second point of view, of the device of figure 1;
- figure 3 is a perspective view of the device of figure 1 in an assembled configuration;
- figure 4 is a side view of the device of figure 1 mounted on a motorbike chain.

In the attached figures, with 1 is indicated a cleaning device of a motorbike motion transmission chain, in accordance with a preferred embodiment of the present invention.

The device 1 comprises a main body 10 made preferably of plastic material and having a substantially parallelepiped shape.

In particular, the main body 10 is defined by an upper body 10a and a lower body 10b mutually connectable through suitable coupling means.

Throughout the present description and in following claims, the words "upper" and "lower" are used with reference to the position of the device once it is mounted on the motorbike chain.

The coupling means also carry out the precise centring of the upper body 10a with respect to the lower body 10b preferably through metallic pins (not illustrated) adapted to be housed in seats 110 formed in the upper body 10a and in the lower body 10b. Preferably, the metallic pins are calibrated pins.

In an alternative embodiment, not illustrated, the coupling means are defined by at least one couple of projecting elements formed on anyone of the upper body 10a and lower body 10b and adapted to be housed in respective seats formed on the other one of the upper body 10a and the lower body 10b.

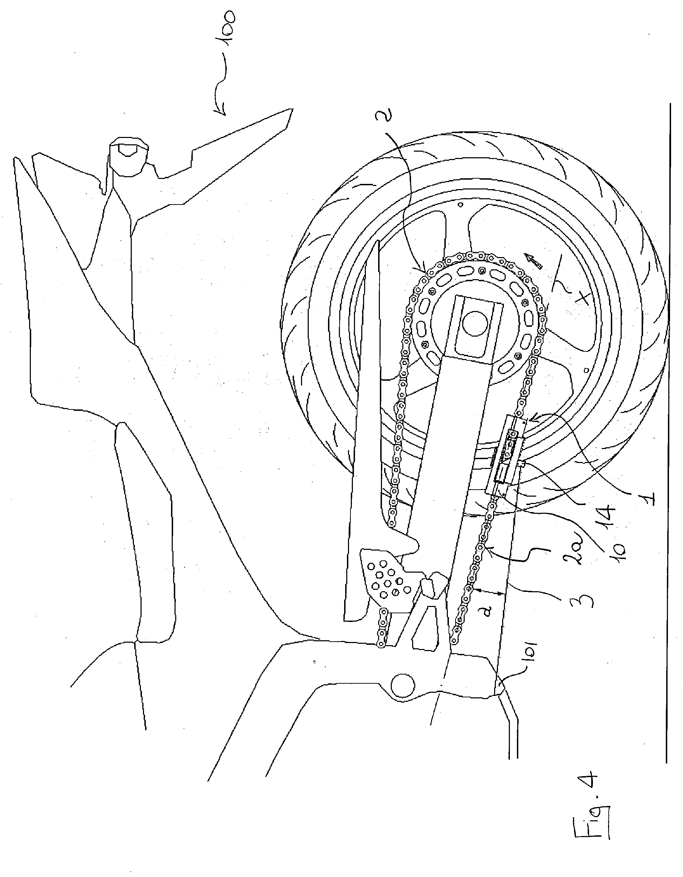

The main body 10 of device 1 extends along a longitudinal axis X which corresponds to the running direction of the chain 2 when the device 1 is mounted on the chain 2 to perform the cleaning action (figure 4). At the opposite free end portions thereof, the main body 10 has respectively a chain inlet opening 12 and a chain outlet opening 13.

As illustrated in figure 4, in operation, device 1 is mounted on a straight branch 2a of the chain 2, preferably the lower branch, in the specific case of a motorbike 100 drive chain. Chain 2 cleaning action is carried out due to the running of chain 2 inside the main body 10 of the device 1 between the chain inlet opening 12 and the chain outlet opening 13. During such action the branch 2a of the chain 2 remains substantially straight.

The relative movement between chain 2 and device 1 is obtained associating the main body 10 to any hold member 101 external to the device 1, for instance any part of the motorbike frame, and moving the chain 2 in suitable way, for instance pushing the motorbike along the road or, if the motorbike is placed on its central stand, pulling the chain or rotating the motorbike wheel.

The coupling between main body 10 and hold member 101 is obtained preferably through a restraint cable 3, preferably made with a flexible material, associated at a first end thereof to a pin 14 projecting from a lower surface of the lower body 10b and, at the second end thereof, to the hold member 101 (see figure 4). In particular, cable 3 is associated to the pin 14 at a flare 14a defined on a head portion of pin 14 with reduced diameter, and is associated to the hold member 101 in a such a way that an angle α of reduced amplitude is defined between cable 3 and chain 2 (see figure 4). Preferably, when device 1 is mounted on chain 2 in a rest position (i.e. when cable 3 is not stretched), angle α is comprised between 0° and ±90°, whilst it is preferably comprised between 0° and ±75°, more preferably between 0° and ±30°, when device 1 is working (i.e. when cable 3 is stretched by the chain movement).

The pin 14 is provided on the lower surface of the lower body 10b in a substantially middle position. Therefore it is in an intermediate position between chain inlet opening 12 and chain outlet opening 13, i.e. in a neutral position with respect to the thrusts exerted at said openings during the running of the chain 2 inside the main body 10 of the device 1.

The running of chain 2 inside the main body 10 of the device 1 is guided in the upper part and in the lower part by the contact between the internal links 50 and the external links 60 of the chain 2 and, respectively, the lower internal surface 11a of the main body 10 defined in the upper body 10a and the upper internal surface 11b of the main body 10 defined in the lower body 10b.

The running of chain 2 inside the main body 10 of the device 1 is guided sideways, i.e. orthogonally to the longitudinal axis X of the device 1, by the contact between the internal links 50 and the external links 60 of the chain 2 and proper running guides 15, 16 defined in the main body 10.

In particular, the main body 10 of the device 1 comprises a first running guide 15 defined centrally on the lower internal surface 11a of the upper body 10a; said guide 15 is provided with opposite side shoulders 15a and 15b adapted to act in abutment with the internal side surfaces of the opposite plates 50a, 50b of internal links 50 of the chain 2.

Guide 15 extends on the upper body 10a along the longitudinal axis X for a first length at the chain inlet opening 12 and for a second length at the chain outlet opening 13. The longitudinal size of the first length of the guide 15 is at least equal to the pitch of the internal links 50 of the chain 2. The rounded shape of the internal links 50 facilitates the inlet of chain 2 in the main body 10 of the device 1.

Furthermore, the main body 10 comprises a running guide 16 defined on the lower body 10b and adapted to act in abutment with the external links 60 of the chain 2. In particular, guide 16 is defined by a couple of opposite side shoulders 16a, 16b defined at the edge between the opposite internal side surfaces 11c of the lower body 10b and the internal upper surface 11b of the main body 10 defined in the lower body 10b. The shoulders 16a, 16b are adapted to act in abutment with the external side surfaces of the opposite plates 60a, 60b of the external links 60 of the chain 2.

Guide 16 extends on the lower body 10b along the longitudinal axis X for a first length at the chain inlet opening 12 and for a second length at the chain outlet opening 13. The longitudinal size of the first length of the guide 16 is at least equal to the pitch of the external links 60 of the chain 2. The rounded shape of the external links 60 facilitates the inlet of the chain 2 in the main body 10 of the device 1.

Guides 15 and 16 are sized in such a way not to come into contact with the ends of the pins 70 and with the rollers 71 of the chain 2.

Dirt removal from chain 2 is carried out thanks to the mechanical action exerted on chain 2 by a plurality of brushes, all indicated with 20 in the attached drawings, properly positioned on the main body 10 of the device 1.

Brushes 20 are mounted in proper seats formed on all the four sides walls of the main body 10 and are arranged in such a way to act from opposite sides both on the internal links 50 and on the external links 60 of the chain 2.

The position of the brushes 20 on the main body 10 is such that opposite brushes are in different positions along the longitudinal axis X of the device 1.

In a particularly preferred embodiment of the device 1 of the present invention, brushes 20 are removably connected to the main body 10, in order to permit their periodical replacement. Furthermore, the position of brushes 20 with respect to chain 2 may be adjustable, so that they can be moved close to chain 2 as bristles wear out. Furthermore, said brushes 20 may be pivotally mounted on the main body 10, i.e. in order to have a little balancing and/or rotating movement so to facilitate further the cleaning action of the chain 2.

The surface profile of brushes 20 may be not straight. For instance, it is advantageous to provide a substantially S-shape profile.

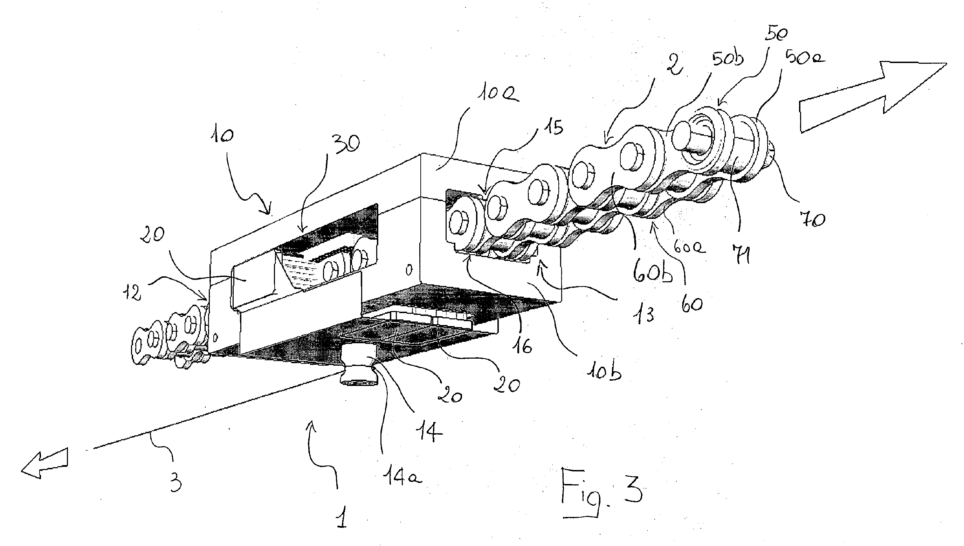

The opposite side surfaces of the main body 10 has respective lightening zones 30 with no material (figure 3).

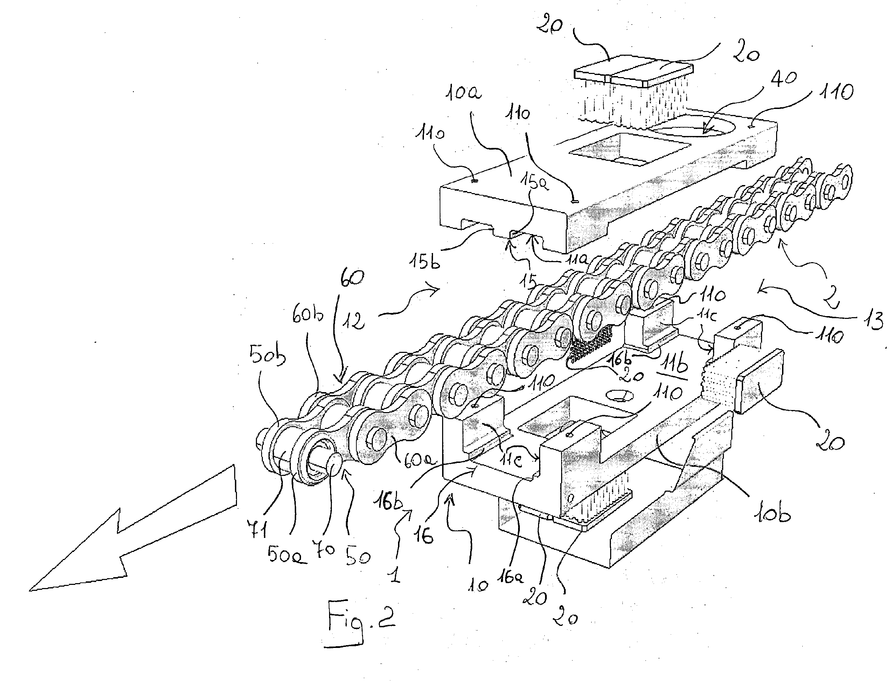

Furthermore the main body 10 comprises a reservoir 40 (figure 2) acting as a tank for a cleaning and/or lubricating fluid. Reservoir 40 comprises one or several evacuation bores (not shown) with a diameter precisely sized to let fluid dropping by gravity. Said bore is inclined with respect to the longitudinal axis X by about 45°, and it opens into the main body 10 at the brushes 20 provided in the upper body 10a of the main body 10 of the device 1. In this way, brushes 20 are soaked with fluid, so that it is put on the chain 2. The movement of the bristles of brushes 20 due to the dragging caused by chain 2 uncovers the evacuation bore and permit the feeding of the fluid. At the same time, the fact that the upper brushes 20 have a different position along the longitudinal axis X of the device 1 with respect to the lower brushes 20, causes the rotation of the chain rollers 71 and a better cleaning/lubricating action, facilitating the penetration of the fluid in the meatus existing between rollers 71 and pins 70.

## Claims

1. Cleaning device (1) for a motion transmission chain (2), comprising:
- a main body (10) adapted to be associated to a substantially straight branch (2a) of a motion transmission chain (2) and to an external constraint (101) in order to permit, during the cleaning operation of the chain (2), the relative running of the chain (2) with respect to the main body (10) between a chain inlet opening (12) and a chain outlet opening (13) of the main body (10) along a substantially straight chain running direction;
- cleaning means (20) associated to said main body (10) and adapted to apply a mechanical cleaning action to said chain (2);
**characterized in that** the device comprises guiding means (15,16) of the chain (2) running defined on said main body (10) and adapted to act on at least one link (50,60) of the chain (2) in order to oppose to the thrusts exerted by the chain (2) on said main body (10) in reaction to the application of said mechanical cleaning action.

2. Device (1) according to claim 1, wherein said guiding means comprise at least one first running guide (15) defined on at least one first internal surface (11a) of said main body (10) and adapted to act on at least one internal link (50) of chain (2) in order to prevent the movement of said at least one internal link (50) along a side direction substantially orthogonal to the running direction of the chain (2).

3. Device (1) according to claim 2, wherein said at least one first running guide (15) comprises a couple of opposite first side shoulders (15a, 15b) adapted to act in contact with respective opposite internal side surfaces (50a, 50b) of said at least one internal link (50) of the chain (2). _

4. Device (1) according to claim 2 or 3, wherein said at least one first running guide (15) extends on said at least one first internal surface (11a) along said chain running direction for at least a part having a length at least equal to the pitch of the internal link (50) of the chain (2).

5. Device (1) according to claim 4, wherein said at least one first running guide (15) extends in said main body (10) along said chain running direction for a first length at said chain inlet opening (12) and for a second length at said chain outlet opening (13).

6. Device (1) according to any of claims from 2 to 5, wherein said main body (10) is defined by an upper body (10a) and a lower body (10b) removably connectable to each other, wherein said at least one first running guide (15) is defined on said upper body (10a).

7. Device (1) according to any of claims from 2 to 6, wherein said guiding means comprise at least one second running guide (16) defined on at least one second internal surface (11b) of said main body (10) and adapted to act on at least one external link (60) of the chain (2) in order to prevent the movement of said at least one external link (60) along said side direction.

8. Device (1) according to claim 7, wherein said at least one second running guide (16) comprises a couple of opposite second side shoulders (16a, 16b) adapted to act in contact with respective opposite external side surfaces (60a, 60b) of said at least one external link (60) of the chain (2).

9. Device (1) according to claim 7 or 8, wherein said at least one second running guide (16) extends on said at least one second internal surface (11b) for at least a part having a length at least equal to the pitch of the external links (60) of the chain (2).

10. Device (1) according to any of claims from 7 to 9 when depending on claim 6, wherein said at least one second running guide (16) is defined in said lower body (10b).

11. Device (1) according to any of claims from 2 to 10, wherein said at least one second running guide (16) extends in said main body (10) along said chain running direction for a first length at said chain inlet opening (12) and for a second length at said chain outlet opening (13).

12. Device (1) according to any of claims from 6 to 11, wherein said main body (10) comprises means for properly centring said upper body (10a) with respect to said lower body (10b).

13. Device (1) according to claim 12, wherein said centring means comprise at least one couple of projecting elements integrally formed with at least one of said upper body (10a) and said lower body (10b), and at least one couple of housing seats for said projecting elements formed in the other one of said lower body (10b) and said upper body (10a).

14. Device (1) according to claim 12 or 13, wherein said centring means comprise metallic pins adapted to be housed in respective seats (110) integrally formed with said upper body (10a) and with said lower body (10b).

15. Device (1) according to any of previous claims, wherein said cleaning means comprise a plurality of brushes (20).
